# EUROPEAN PATENT APPLICATION

(11) **EP 4 772 561 A1**
(43) Date of publication of application: **08.07.2026**
(21) Application number: 24859425.1
(22) Date of filing: 09.08.2024
(51) Int. Cl.: C08G 65/40

(54) **POLYETHER NITRILE AND POLYETHER NITRILE PARTICLE**

(30) Priority: 29.08.2023 JP 2023138829
(71) Applicant: Toray Industries, Inc., Tokyo 103-8666 (JP)
(72) Inventor: AKAHIRA, Masato, Nagoya-shi, Aichi 455-8502 (JP); HIRANO, Taisuke, Nagoya-shi, Aichi 455-8502 (JP)
(74) Representative: Mewburn Ellis LLP
(86) International application number: PCT/JP2024/028651
(87) International publication number: WO 2025/047385

(57) **Abstract**

A polyether nitrile represented by Formula (I), in which a ratio "integral value of peak A (peak having a peak top at 7.10 to 7.20 ppm)/integral value of peak B (peak having a peak top at 7.55 to 7.68 ppm)" in proton nuclear magnetic resonance measurement measured using a mixed solvent of pentafluorophenol and deuterated chloroform in a volume ratio of 5 : 4 is 0.050 or less. Provided is a polyether nitrile having high thermal stability.

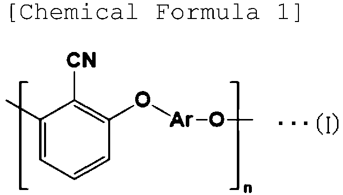

## Description

### TECHNICAL FIELD

The present invention relates to a polyether nitrile and a polyether nitrile particle.

### BACKGROUND ART

Polyether nitriles are a type of super engineering plastics that have advanced properties such as excellent thermal stability, chemical resistance, and flame retardance, as well as excellent mechanical characteristics such as abrasion resistance and friction resistance.

Although polyether nitriles have advanced properties as described above, higher thermal stability is required due to the recent advancement of required properties of materials.

In general, active functional group terminals present in a polymer are assumed to function as reactive sites of a polymer reaction or interaction sites with an additive, but cause a decrease in thermal stability. Patent Document 1 discloses a method using a mono-substituted halogen compound for the purpose of controlling the molecular weight during polymerization of a polyether nitrile.

### PRIOR ART DOCUMENT

### PATENT DOCUMENT

Patent Document 1: Japanese Patent Laid-open Publication No. S63-270733

### SUMMARY OF THE INVENTION

### PROBLEMS TO BE SOLVED BY THE INVENTION

However, with the polyether nitrile disclosed in Patent Document 1, improvement of thermal stability was insufficient. In addition, in Patent Document 1, a mechanism, a factor, and the like that enable control of the terminal structure and the thermal stability are not described. In addition, in the method disclosed in Patent Document 1, it is necessary to use a third component other than a monomer in order to end-cap the polymer, and there has been room for improvement in processing properties and economy.

Therefore, in view of these problems of the prior art, an object of the present inventors is to provide a polyether nitrile having excellent thermal stability.

### SOLUTIONS TO THE PROBLEMS

The inventors of the present invention have conducted intensive studies in order to solve the above problems, and found an analysis method that enables analysis of the terminal structure of a polyether nitrile and quantification thereof, which have been conventionally difficult. Then, on the basis of the analysis method, the relationship between the terminal structure and thermal stability of the polyether nitrile was analyzed, and a method for controlling the terminal structure has been found. Then, the present inventors have completed the present invention by finding that a polyether nitrile satisfying specific requirements is excellent in thermal stability. That is, the present invention has the following constitutions.
(1) A polyether nitrile represented by Formula (I), in which a ratio "integral value of peak A/integral value of peak B" in proton nuclear magnetic resonance measurement measured using a mixed solvent of pentafluorophenol and deuterated chloroform in a volume ratio of 5 : 4 is 0.050 or less:
   peak A: a peak having a peak top at 7.10 to 7.20 ppm
   peak B: a peak having a peak top at 7.55 to 7.68 ppm 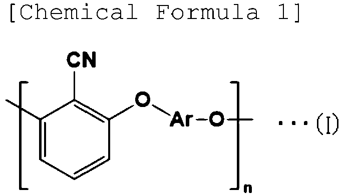 In Formula (I), Ar is a unit represented by any one of Formulas (a) to (f), and Ar may include one kind or two or more kinds of units. 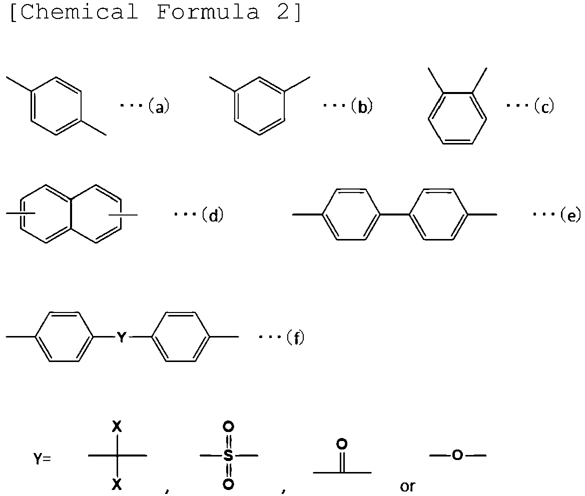
(2) The polyether nitrile according to (1), in which a ratio "integral value of peak representing terminal/integral value of peak B" in proton nuclear magnetic resonance measurement measured using a mixed solvent of pentafluorophenol and deuterated chloroform in a volume ratio of 5 : 4 is 0.001 to 0.055.
(3) The polyether nitrile according to (1) or (2), in which Ar includes two or more kinds of units.
(4) A polyether nitrile particle including the polyether nitrile according to any one of (1) to (3), having a number average particle diameter of 0.1 to 200 µm.
(5) A member for a mobility, including the polyether nitrile according to any one of (1) to (3).
(6) A member for a structural material, including the polyether nitrile according to any one of (1) to (3).
(7) A member for an electrical/electronic material, including the polyether nitrile according to any one of (1) to (3).
(8) A mobility including the member for a mobility according to (5).
(9) A structural member including the member for a structural material according to (6).
(10) An electrical/electronic product including the member for an electrical/electronic material according to (7).

### EFFECTS OF THE INVENTION

With the present invention, a polyether nitrile having excellent thermal stability can be provided.

### EMBODIMENT OF THE INVENTION

Hereinafter, the present invention will be described in detail with reference to an embodiment.

### (1) Polyether Nitrile

A polyether nitrile of the present invention is a polyether nitrile represented by Formula (I).

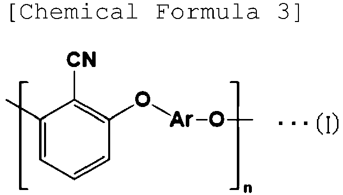

In Formula (I), Ar is a unit represented by any one of Formulas (a) to (f). Ar may be formed of one kind or two or more kinds of units.

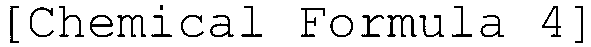

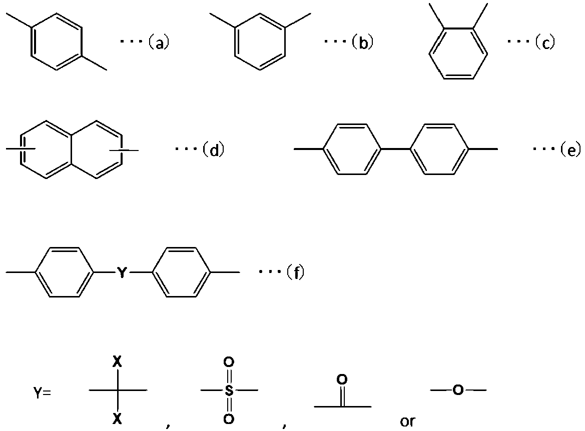

In the polyether nitrile of the present invention, Ar may be formed of two or more kinds of units.

In the case where Ar is formed of two kinds of units, when the number of repeating units represented by the first kind of Ar contained in the polyether nitrile is denoted by N, and the number of repeating units represented by the second kind of Ar is denoted by M, the content (molar ratio) of the repeating units represented by the first kind of Ar with respect to the total Ar is represented by [N/(N + M)]. Note that the relationship between N and M here is N ≥ M. At this time, when it is desired to obtain a polyether nitrile having a lower melting point, it is preferable to set the content to be [N/(N + M)] < 1.00. In addition, in order to obtain a polyether nitrile having high crystallinity, it is preferable to set the content to be 0.8 ≤ [N/(N + M)]. In order to obtain a polyether nitrile having excellent processability, the polyether nitrile preferably has a low melting point. On the other hand, in order to obtain a polyether nitrile having excellent mechanical properties, the polyether nitrile preferably has high crystallinity.

The polyether nitrile in the present invention may be subjected to terminal modification with an end-capping agent.

In the polyether nitrile of the present invention, the ratio between the integral value of a peak A below and the integral value of a peak B below, "integral value of peak A/integral value of peak B", in proton nuclear magnetic resonance measured using a mixed solvent of pentafluorophenol and deuterated chloroform in a volume ratio of 5 : 4 is 0.050 or less.
Peak A: A peak having a peak top at 7.10 to 7.20 ppm
Peak B: A peak having a peak top at 7.55 to 7.68 ppm

The ratio "integral value of peak A/integral value of peak B" is preferably 0.040 or less, more preferably 0.020 or less, most preferably 0. The ratio "integral value of peak A/integral value of peak B" is 0 or more.

Here, the peak A is a peak having a peak top at 7.10 to 7.20 ppm in proton nuclear magnetic resonance measurement. When a plurality of peaks are present in the range of 7.10 to 7.20 ppm, the integral value of the peak A refers to a value obtained by adding the integral values of the plurality of peaks in the range of 7.10 to 7.20 ppm. The peak B is a peak having a peak top at 7.55 to 7.68 ppm in proton nuclear magnetic resonance measurement. When a plurality of peaks are present in the range of 7.55 to 7.68 ppm, the integral value of the peak B refers to a value obtained by adding the integral values of the plurality of peaks in the range of 7.55 to 7.68 ppm.

In addition, when a polymer other than the polyether nitrile or an additive is contained, it is preferable to perform proton nuclear magnetic resonance measurement in a state where the polymer other than the polyether nitrile and the additive have been removed.

The peak A is a peak indicating a proton next to an activating group of an aromatic ring having an activating group that adversely affects thermal stability among peaks indicating aromatic rings at polymer terminals of the polyether nitrile. When the activating group is a hydroxyl group derived from a diol monomer, a peak corresponding to two protons appears per one hydroxyl group terminal in the region of the peak A. Here, the hydroxyl group terminal refers to a hydroxyl group when the aromatic ring at the polymer terminal has the hydroxyl group.

The peak B is a peak indicating a proton of an aromatic ring having a nitrile contained in a repeating unit constituting a polymer chain of the polyether nitrile. In the region of the peak B, a peak corresponding to one proton appears per one aromatic ring having a nitrile.

That is, the ratio "integral value of peak A/integral value of peak B" indicates the ratio of the activating groups at the polymer terminals that adversely affect the thermal stability in the polymer chain of the polyether nitrile. Examples of the activating group that adversely affects thermal stability include polar functional groups such as hydroxyl groups.

A method for setting the ratio "integral value of peak A/integral value of peak B" to 0.050 or less is not particularly limited, but for example, the value is achieved by any one of the following two methods.

As a method 1, in the method for producing a polyether nitrile described later, it is preferable that in the relationship between an aromatic compound substituted with two hydroxyl groups and an aromatic compound having a benzonitrile skeleton substituted with two halogeno groups, which are monomers, the ratio of the aromatic compound having a benzonitrile skeleton substituted with two halogeno groups be excessive relative to that of the aromatic compound substituted with two hydroxyl groups in terms of molar ratio. In this case, in the polyether nitrile obtained by completing the polymerization, hydroxyl group terminals derived from the aromatic compound substituted with two hydroxyl groups can be reduced, and the ratio "integral value of peak A/integral value of peak B" can be 0.050 or less.

In order to set the ratio "integral value of peak A/integral value of peak B" to 0.050 or less, it is preferable to complete the polymerization by securing a sufficient reaction time in the polymerization reaction. In order to complete the polymerization, it is preferable to perform the reaction for 6 hours or more after the target maximum reaction temperature is reached. In order to confirm the completion of the polymerization, the reaction liquid during the polymerization is sampled, proton nuclear magnetic resonance is measured using a mixed solvent of pentafluorophenol and deuterated chloroform in a volume ratio of 5 : 4, and the completion of the polymerization can be confirmed by the fact that the ratio "integral value of peak representing terminal/integral value of peak B" in the measured proton nuclear magnetic resonance measurement does not change.

In the case of using NMP as the polymerization solvent, when the polymerization reaction is performed at 200°C, the reaction time at 200°C is preferably 6 to 10 hours, more preferably 8 to 10 hours, in order to complete the polymerization. By performing the reaction at 200°C for 6 hours or more, completion of the polymerization can be expected.

In addition, as a method 2, hydroxyl group terminals are capped by terminal modification by addition of an end-capping agent, so that the hydroxyl group terminals are reduced, and the ratio "integral value of peak A/integral value of peak B" can be set to 0.050 or less. Examples of the end-capping agent include a compound that reacts with a phenolic hydroxyl group, such as an organic halide. When the polyether nitrile is produced by polymerization, or when the polyether nitrile and other components are blended, an end-capping agent can be blended to set the ratio "integral value of peak A/integral value of peak B" to 0.050 or less.

The method 1 above is more preferable in that the end-capping agent, which is a component other than the monomers, is not required. The method 1 and the method 2 may be used in combination.

The polyether nitrile of the present invention preferably shows that the ratio "integral value of peak representing terminal/integral value of peak B" in proton nuclear magnetic resonance measurement measured using a mixed solvent of pentafluorophenol and deuterated chloroform in a volume ratio of 5 : 4 is 0.001 to 0.055. The ratio "integral value of peak representing terminal/integral value of peak B" is an index representing the polymer length of the polyether nitrile. The larger the ratio "integral value of peak representing terminal/integral value of peak B", the shorter the polymer length of the polyether nitrile. In order to obtain a polyether nitrile having high mechanical properties, it is preferable that the ratio "integral value of peak representing terminal/integral value of peak B" be small. In order to obtain a low-viscosity polyether nitrile excellent in processability, it is preferable that the ratio "integral value of peak representing terminal/integral value of peak B" be large. The preferable range varies depending on the purpose, but the ratio "integral value of peak representing terminal/integral value of peak B" is more preferably 0.010 to 0.050, still more preferably 0.020 to 0.040, as a range in which both mechanical properties and processability of the polyether nitrile are maintained.

Regarding the peak representing the terminal, in the case of a polyether nitrile using only the aromatic compound substituted with two hydroxyl groups and the aromatic compound having a benzonitrile skeleton substituted with two halogeno groups as monomers, the terminal structure of the polymer is a hydroxyl group terminal or a halogen terminal. As described above, the hydroxyl group terminal is an aromatic ring having a hydroxyl group, and is represented by a peak A having a peak top at 7.10 to 7.20 ppm in proton nuclear magnetic resonance measurement. On the other hand, the halogen terminal is an aromatic ring having a halogen substituent. In proton nuclear magnetic resonance measurement, when a peak of an aromatic ring having a halogen substituent is defined as a peak C, the peak C is a peak having a peak top at 6.95 to 7.00 ppm. In the region of the peak C, a peak corresponding to one proton appears per one aromatic ring having a halogen substituent. Therefore, the "integral value of peak representing terminal" described above is the "sum of the integral value of the peak A and the integral value of the peak C" (hereinafter sometimes referred to as an integral value of the peaks (A + C)).

In addition, in the case of a polyether nitrile subjected to terminal modification using an end-capping agent in addition to the aromatic compound substituted with two hydroxyl groups and the aromatic compound having a benzonitrile skeleton substituted with two halogeno groups as monomers, the "integral value of peak representing terminal" is the "sum of integrated values of the peak A, the peak C, and the peak derived from the end-capping agent". The peak A represents the amount of hydroxyl group terminals present, and a peak corresponding to two protons appears per hydroxyl group terminal. The peak C represents a halogen terminal, and a peak per one halogen terminal appears. In the case of using an end-capping agent that caps the hydroxyl group terminals, regardless of what number of protons providing a peak derived from the end-capping agent introduced to the terminals corresponds to one structural unit (such as one proton or four protons), the sum is calculated after conversion into two protons. That is, for example, when the number of protons of the peak derived from the end-capping agent per structural unit is four in proton nuclear magnetic resonance measurement, the integral value of the peak derived from the end-capping material is divided by two to be converted into an area value of two protons and added to the integral value of the peak A and the integral value of the peak C. In the case of using an end-capping agent that caps the halogen terminals, regardless of what number of protons providing a peak derived from the end-capping agent introduced to the terminals corresponds to one structural unit, the sum is calculated after conversion into one proton. That is, for example, when the number of protons of the peak derived from the end-capping agent is three in proton nuclear magnetic resonance measurement, the integral value of the peak derived from the end-capping material is divided by three to be converted into an area value of one proton and added to the integral value of the peak A and the integral value of the peak C.

The melting point of the polyether nitrile of the present invention is preferably 280 to 360°C, more preferably 280 to 350°C, from the viewpoint of processability.

The terminal group of the polyether nitrile of the present invention is not limited but is usually a group selected from a hydroxyl group, a metal salt of a hydroxyl group, a halogeno group, a linear organic group having 1 to 16 carbon atoms, a branched organic group, and a cyclic organic group.

The polyether nitrile of the present invention has excellent thermal stability when the ratio "integral value of peak A/integral value of peak B" in proton nuclear magnetic resonance measurement measured using a mixed solvent of pentafluorophenol and deuterated chloroform in a volume ratio of 5 : 4 is 0.050 or less. In the present invention, the phrase "excellent thermal stability" means that the weight loss rate is small when heating from 50°C to the melting point + 30°C in air at a heating rate of 20°C/min and holding at the melting point + 30°C for 30 minutes in thermogravimetric (TG) analysis are performed, or the viscosity increase rate is small when holding at the melting point + 30°C in air for 30 minutes in rheometer measurement is performed. As for the polyether nitrile of the present invention, it is preferable that the weight loss rate be small when heating from 50°C to the melting point + 30°C in air at a heating rate of 20°C/min and holding at the melting point + 30°C for 30 minutes in thermogravimetric (TG) analysis are performed, and the viscosity increase rate be small when holding at the melting point + 30°C in air for 30 minutes in rheometer measurement is performed.

As for the polyether nitrile of the present invention, in the thermogravimetric (TG) analysis, the weight loss rate in the case of heating from 50°C to the melting point + 30°C in air at a heating rate of 20°C/min and holding at the melting point + 30°C for 30 minutes is preferably 0.8% or less, more preferably 0.6% or less, still more preferably 0.4% or less. It is to be noted that the weight loss rate is calculated on the basis of the weight after holding at 50°C for 1 minute.

The polyether nitrile of the present invention preferably has a viscosity increase rate of 70% or less, more preferably 60% or less, still more preferably 35% or less, when the polyether nitrile is held at the melting point + 30°C in air for 30 minutes in rheometer measurement. This viscosity increase is presumed to be due to oxidation in air. It is presumed that the presence of an active terminal such as a hydroxyl group terminal in the polyether nitrile accelerates the viscosity increase by oxidation in air.

The polyether nitrile of the present invention can be molded by a method such as injection molding, injection-compression molding, blow molding, and extrusion molding. At the time of molding, the polyether nitrile may be used singly or may be used as a composition in which an inorganic filler such as glass fiber, carbon fiber, titanium oxide, and calcium carbonate, and/or an additive such as an antioxidant, a thermal stabilizer, an ultraviolet absorber, and a colorant is blended as desired. In addition, at the time of molding, a resin other than the polyether nitrile of the present invention can be blended.

Since the polyether nitrile of the present invention is excellent in thermal stability, it can be used as a member for a mobility, a member for an electrical/electronic material, a member for a structural material, a member for a household/office electrical product, a member for an optical equipment/precision machine-related part, a member for a domestic plumbing part, and a member for other industrial use. Examples of the member for a mobility of the present invention include members for automobiles, aircraft, ships, motorcycles, drones, urban air mobility, and kick scooters. Examples of the member for an electrical/electronic material of the present invention include members for integrated circuits, connectors, and insulators. Examples of the member for a structural material of the present invention include members for buildings, bridges, railways, roads, and harbors. The polyether nitrile of the present invention is particularly suitable for a member for a mobility, a member for an electrical/electronic material, and a member for a structural material, which are required to have excellent characteristics including thermal stability.

A mobility using a member for a mobility containing the polyether nitrile of the present invention exhibits excellent characteristics. Examples of the mobility of the present invention include automobiles, aircraft, ships, motorcycles, drones, urban air mobility, and kick scooters.

An electrical/electronic product using the member for an electrical/electronic material containing the polyether nitrile of the present invention exhibits excellent characteristics. Examples of the electrical/electronic product of the present invention include integrated circuits, connectors, and insulators.

A structural member using a member for a structural material containing the polyether nitrile of the present invention exhibits excellent characteristics. Examples of the structural member of the present invention include buildings, bridges, railways, roads, and harbors.

Polyether nitrile particles of the present invention includes the polyether nitrile of the present invention and have a number average particle diameter of 0.1 to 200 µm or less. By setting the number average particle diameter to 200 µm or less, the surface can be easily made homogeneous with a coating film or the like produced from the particles. When the number average particle diameter is 0.1 µm or more, aggregation of the particles can be easily suppressed. The number average particle diameter of the polyether nitrile particles is preferably 100 µm or less because the polyether nitrile particles can be suitably used for applications such as powder coating. When the number average particle diameter is 100 µm or less, the surface becomes homogeneous with a coating film or the like produced from the particles.

Examples of the method for obtaining the polyether nitrile particles having a number average particle diameter in the above range include a method of changing the conditions for formation of the particles. For example, the number average particle diameter can be controlled by changing the composition of a poor solvent described later. In addition, examples of the method include a method of pulverizing particles or polymer masses, and a method of dissolving the particles or polymer masses to form particles again.

### (2) Method for Producing Polyether Nitrile

The method for producing the polyether nitrile of the present invention is not particularly limited as long as it can synthesize a polyether nitrile satisfying the requirements in the above section (1), and any production method can be adopted. For example, the polyether nitrile of the present invention can be produced by heating an aromatic compound substituted with two hydroxyl groups, an aromatic compound having a benzonitrile skeleton substituted with two halogeno groups, and a base in a polar organic solvent.

The aromatic compound substituted with two hydroxyl groups, the aromatic compound having a benzonitrile skeleton substituted with two halogeno groups, the base, the polar organic solvent, and the reaction conditions for use in an example of the method for producing the polyether nitrile of the present invention will be described below.

As the aromatic compound substituted with two hydroxyl groups used as a monomer in the method for producing the polyether nitrile of the present invention, a compound represented by any of General Formulas (g) to (l) can be given as an example.

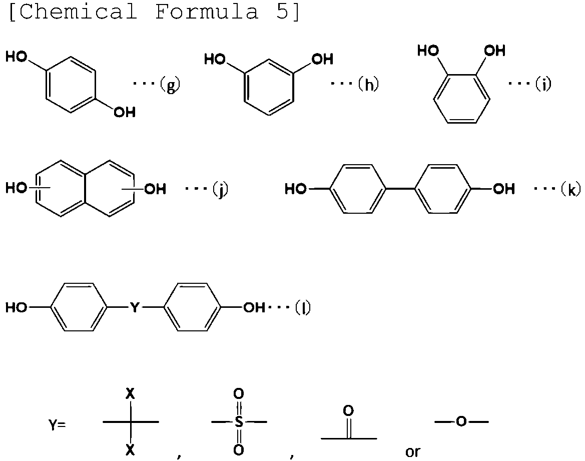

As the aromatic compound substituted with two hydroxyl groups, a compound selected from resorcinol, hydroquinone, 4,4'-dihydroxybiphenyl, 2,2'-bis(4-hydroxyphenyl)propane, and bis(4-hydroxyphenyl) sulfone is more preferable. Two or more kinds of compounds substituted with two hydroxyl groups may be used.

The compound represented by Formula (m) below can be applied as the compound having a benzonitrile skeleton substituted with two halogeno groups used as a monomer in the method for producing the polyether nitrile of the present invention.

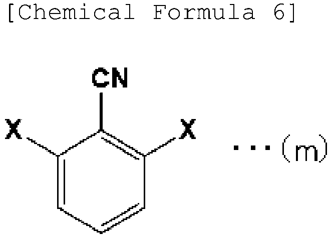

X is a chlorine atom or a fluorine atom. Examples of the compound having a benzonitrile skeleton substituted with two halogeno groups include 2,6-dichlorobenzonitrile, 2,6-difluorobenzonitrile, and 2-chloro-6-fluorobenzonitrile, and 2,6-dichlorobenzonitrile is preferable.

Examples of the base used in the method for producing the polyether nitrile of the present invention include organic bases and inorganic bases. Specific examples thereof include organic bases such as 1,8-diazabicyclo[5.4.0]-7-undecene, 1,5-diazabicyclo[4.3.0]-5-nonene, 7-methyl-1,5,7-triazabicyclo[4.4.0]deca-5-ene, and 1,5,7-triazabicyclo[4.4.0]deca-5-ene; alkali metal carbonates such as lithium carbonate, sodium carbonate, potassium carbonate, rubidium carbonate, and cesium carbonate; carbonates of alkaline earth metals such as calcium carbonate, strontium carbonate, and barium carbonate; bicarbonates of alkali metals such as lithium hydrogen carbonate, sodium hydrogen carbonate, potassium hydrogen carbonate, rubidium hydrogen carbonate, and cesium hydrogen carbonate; bicarbonates of alkaline earth metals such as calcium hydrogen carbonate, strontium hydrogen carbonate, and barium hydrogen carbonate; hydroxides of alkali metals such as lithium hydroxide, sodium hydroxide, potassium hydroxide, rubidium hydroxide, and cesium hydroxide; and hydroxides of alkaline earth metals such as calcium hydroxide, strontium hydroxide, and barium hydroxide. Among these examples, from the viewpoint of ease of handling and reactivity, carbonates such as sodium carbonate and potassium carbonate, and bicarbonates such as sodium hydrogen carbonate and potassium hydrogen carbonate are preferable, sodium carbonate and potassium carbonate are more preferable, and sodium carbonate is still more preferably used. These may be used alone or in combination of two or more thereof without problems. In addition, these bases are preferably used in the form of an anhydride, but can also be used as a hydrate or an aqueous mixture. It is to be noted that the aqueous mixture herein refers to an aqueous solution, a mixture of an aqueous solution and a solid component, or a mixture of water and a solid component.

The amount of the base in the method for producing the polyether nitrile of the present invention depends on the amount of the aromatic compound substituted with two hydroxyl groups. When a monoacidic base is used, at least 2 equivalents are required for the aromatic compound substituted with 2 hydroxyl groups, and the amount is preferably 2.2 equivalents or more, more preferably 2.4 equivalents or more. By blending a sufficient amount of the base, in the resulting polyether nitrile, the ratio "integral value of peak A/integral value of peak B" in proton nuclear magnetic resonance measurement measured using a mixed solvent of pentafluorophenol and deuterated chloroform in a volume ratio of 5 : 4 can be reduced. When a diacidic base such as sodium carbonate is used, at least 1 equivalent is required for the aromatic compound substituted with 2 hydroxyl groups, and the amount is preferably 1.1 equivalents or more, more preferably 1.2 equivalents or more. The upper limit of the content is not particularly limited because the production is possible without any problem even if the base is used in excess, but is practically 10 equivalents or less.

In a preferable method for producing the polyether nitrile of the present invention, the polar organic solvent to be used is not particularly limited as long as the reaction is not inhibited. Specific examples of such a polar organic solvent include nitrogen-containing polar solvents such as N-methyl-2-pyrrolidone (NMP), N-methylcaprolactam, N,N-dimethylformamide (DMF), N,N-dimethylacetamide (DMAc), 1,3-dimethyl-2-imidazolidinone (DMI), hexamethylphosphoramide, and tetramethylurea; sulfoxide/sulfone-based solvents such as dimethyl sulfoxide (DMSO), dimethyl sulfone, diphenyl sulfone, and sulfolane; nitrile-based solvents such as benzonitrile; diaryl ethers such as diphenyl ether; ketones such as benzophenone and acetophenone; and mixtures thereof. These are all preferably used because of the high reaction stability, and among the examples, a solvent selected from NMP, DMSO, and sulfolane is preferable, and NMP is particularly preferably used. These polar organic solvents are excellent in stability in a high temperature region, and can be said to be preferable polar organic solvents also from the viewpoint of availability.

When the polyether nitrile is produced, by-product water is produced as the reaction proceeds. For the purpose of removing the by-product water, an organic compound that forms an azeotropic mixture with water can be added as necessary. Such an organic compound is not particularly limited as long as the compound forms an azeotropic mixture with water, but a nonpolar organic solvent with a boiling point lower than that of the reaction solvent is preferable, and specific examples thereof include toluene.

The method for producing the polyether nitrile of the present invention is usually carried out under heating under a nitrogen atmosphere or under reduced pressure. The reaction temperature can be varied over a wide range, but the reaction is preferably carried out at a temperature of 80°C or higher, more preferably 150°C or higher. From the viewpoint of manufacturability, the reaction temperature is preferably 400°C or lower, more preferably 350°C or lower. In consideration of the sublimability and reactivity of compounds to be used, the method is preferably performed while gradually raising the temperature in the range of 150 to 350°C, more preferably in the range of 150 to 200°C.

Through separation and collection from the reaction mixture obtained as described above, the polyether nitrile of the present invention can be obtained. The reaction mixture obtained by the production method mentioned above includes at least the polyether nitrile, and may include therein oligomers, by-product salts, unreacted bases, and the like as other components. The method for collecting the polyether nitrile from such a reaction mixture is not particularly limited, and examples thereof can include a method of collecting the polyether nitrile by, as necessary, bringing the polyether nitrile into contact with a solvent that dissolves the by-product salt under heating as necessary, and a method of removing the by-product salts or the oligomers under reduced pressure.

As the solvent that dissolves the by-product salts, a solvent having relatively high polarity is generally preferably used. Preferable solvents vary depending on the kinds of the bases used or the by-product salts and cannot be limited, but examples thereof include water; alcohols typified by methanol, ethanol, propanol, isopropanol, butanol, and hexanol; ketones typified by acetone and methyl ethyl ketone; acetic acid esters typified by ethyl acetate and butyl acetate; nitrogen-containing polar solvents such as N-methyl-2-pyrrolidone (NMP), N-methylcaprolactam, N,N-dimethylformamide (DMF), N,N-dimethylacetamide (DMAc), 1,3-dimethyl-2-imidazolidinone (DMI), hexamethylphosphoramide, and tetramethylurea; sulfoxide/sulfone-based solvents such as dimethyl sulfoxide (DMSO), dimethyl sulfone, diphenyl sulfone, and sulfolane; and acids such as acetic acid, hydrochloric acid, sulfuric acid, and nitric acid. From the viewpoint of availability and economic efficiency, a solvent selected from water, methanol, acetone, acetic acid, hydrochloric acid, sulfuric acid, and NMP is preferable, and water, acetic acid, hydrochloric acid, and NMP are more preferable. These solvents may be used alone, or a mixture of two or more types of the solvents may be used.

In the method of removing the oligomers under reduced pressure, the reaction may be carried out in the range of 0.001 atm to 1 atm under heating as necessary, after completion of the reaction.

The polyether nitrile particles of the present invention can be obtained by a method of precipitating polyether nitrile particles from a solution in which the polyether nitrile of the present invention is dissolved. This process is called formation of particles. At this time, after the solid polyether nitrile is dissolved in the organic solvent, the polyether nitrile may be formed into particles from the solution, but to reduce the number of steps, it is preferable to directly form the polyether nitrile into particles from the reaction mixture in which the polyether nitrile obtained as described above is dissolved.

When the polyether nitrile particles of the present invention are produced, as a method for precipitating the polyether nitrile particles, the polyether nitrile particles can be obtained by discharging the polyether nitrile solution into a mixture of a good solvent and a poor solvent.

The good solvent of the polyether nitrile is not limited as long as it is a solvent that dissolves the polyether nitrile, and may be a solvent that dissolves the polyether nitrile under heating. Specific examples of such a solvent include nitrogen-containing polar solvents such as N-methyl-2-pyrrolidone (NMP), N-methylcaprolactam, N,N-dimethylformamide (DMF), N,N-dimethylacetamide (DMAc), 1,3-dimethyl-2-imidazolidinone (DMI), hexamethylphosphoramide, and tetramethylurea; sulfoxide/sulfone-based solvents such as dimethyl sulfoxide (DMSO), dimethyl sulfone, diphenyl sulfone, and sulfolane; nitrile-based solvents such as benzonitrile, diaryl ethers such as diphenyl ether, ketones such as benzophenone and acetophenone; and mixtures thereof. When the polyether nitrile is formed into particles from the reaction mixture, a solvent selected from NMP, DMSO, and sulfolane, which are also particularly preferably used as the reaction solvent, is preferable.

The poor solvent is not limited as long as it is a solvent that is miscible with the good solvent of the polyether nitrile and does not dissolve the polyether nitrile. Specifically, methanol, water, and the like are preferable.

For example, the polyether nitrile can be formed into particles by discharging the reaction solution after completion of the reaction to a receiving container containing a mixed solvent of NMP : water = 8 : 2 (volume ratio). At this time, the number average particle diameter of the resulting polyether nitrile particles can be controlled by the type and composition of the poor solvent. For example, by reducing the ratio of water, particles having a smaller number average particle diameter can be obtained.

In addition, the particles or polymer masses thus obtained can also be formed into particles having a target number average particle diameter by a method of pulverizing the particles or polymer masses.

### EXAMPLES

Hereinafter, the present invention will be specifically described with reference to examples. These examples are illustrative, but not restrictive.

### <Proton Nuclear Magnetic Resonance Measurement>

The proton nuclear magnetic resonance measurement was performed by dissolving a sample in a mixed solvent of pentafluorophenol/deuterated chloroform = 5/4 (volume ratio) using JNM-ECZ-500R manufactured by JEOL Ltd. From the obtained spectrum, the ratio "integral value of peak A/integral value of peak B" and the ratio "integral value of peak representing terminal (integral value of peaks (A + C))/integral value of peak B" were calculated.
Peak A: A peak having a peak top at 7.10 to 7.20 ppm
Peak B: A peak having a peak top at 7.55 to 7.68 ppm
Peak C: A peak having a peak top at 6.95 to 7.00 ppm.

### <Melting Point>

The melting point was determined by differential scanning calorimetry (DSC) measurement. The DSC measurement was performed with the use of Q20 manufactured by TA Instruments. The temperature was raised from 50°C to 400°C at a heating rate of 20°C/min, held at 400°C for 1 minute as it was, then lowered from 400°C to 50°C at a cooling rate of 20°C/min, raised again from 50°C to 400°C at a heating rate of 20°C/min, held at 400°C for 1 minute, and then lowered from 400°C to 100°C at a cooling rate of 20°C/min. The melting point was a value obtained in the second heating.

### <Thermogravimetric (TG) Analysis>

The weight loss rate when held at the melting point + 30°C for 30 minutes was measured using TGA7 manufactured by PerkinElmer, Inc. The sample was held at 50°C for 1 minute under an air stream and then heated to the melting point + 30°C, and the weight loss rate after holding at the melting point + 30°C for 30 minutes was determined. When the weight loss rate was calculated, the weight after holding at 50°C for 1 minute was used as a reference.

### <Melt Viscosity>

The viscosity increase rate was measured using a rheometer. The rheometer used was Physica MCR 501 manufactured by Anton Paar GmbH, and the measurement was performed at a swing angle of 1000 Pa and an angular frequency of 6.28 rad/s. The sample was held at the melting point + 30°C in air for 30 minutes, and the viscosity increase rate was calculated from the change in melt viscosity before and after heating.

### <Number Average Particle Diameter of Polyether Nitrile Particles>

The number average particle diameter of the polyether nitrile particles was calculated by shape observation with a microscope. Using VHX-S650 manufactured by KEYENCE CORPORATION as the microscope, the diameters of 100 random particles were measured from a micrograph observed at a magnification of 100 times, and the average of the diameters was calculated. When the particle shape was not a perfect sphere, the longest diameter and the shortest diameter were measured, and the average thereof was taken as the particle diameter.

### <Raw Materials Used in Examples>

· Hydroquinone (FUJIFILM Wako Pure Chemical Corporation)
· Resorcinol (FUJIFILM Wako Pure Chemical Corporation)
· 4,4'-Dihydroxybiphenyl (Tokyo Chemical Industry Co., Ltd.)
· 2,6-Dichlorobenzonitrile (Tokyo Chemical Industry Co., Ltd.)
· Sodium carbonate (KANTO CHEMICAL CO., INC.)
· NMP (FUJIFILM Wako Pure Chemical Corporation).

### [Example 1]

In a 300-mL separable flask equipped with a stirrer, a nitrogen introducing tube, and a Dean-Stark tube, 8.81 g (80.0 mmol) of hydroquinone, 13.93 g (81.0 mmol) of 2,6-dichlorobenzonitrile, and 10.18 g (96.0 mmol) of sodium carbonate were put, with 80 mL of NMP and 3 mL of toluene added thereto under a nitrogen atmosphere, and allowed to react at 160°C for 0.5 hours, and then at 200°C for 8 hours. After completion of the reaction, the polyether nitrile was formed into particles by discharging the reaction solution to a receiving container containing 300 mL of a mixed solvent of NMP : water = 8 : 2 (volume ratio). The obtained polyether nitrile particles were washed 3 times with 300 mL of a mixed solvent (room temperature) of NMP : water = 8 : 2 (volume ratio) and further 3 times with 300 mL of warm water (80°C), and vacuum-dried at 80°C overnight to provide 13.6 g of white polyether nitrile particles.

As a result of proton nuclear magnetic resonance measurement, a peak (peak A) derived from a hydroxyl group terminal was observed at 7.11 to 7.13 ppm, a peak (peak B) derived from a benzonitrile skeleton of a main chain was observed at 7.59 to 7.62 pm, and a peak (peak C) derived from a chloro group terminal was observed at 6.97 to 6.99 ppm. The ratio "integral value of peak A/integral value of peak B" and the ratio "integral value of peaks (A + C)/integral value of peak B" were calculated from the respective integral values. The obtained polyether nitrile was analyzed, and the ratio "integral value of peak A/integral value of peak B", the ratio "integral value of peaks (A + C)/integral value of peak B", the melting point, the weight loss rate in air, the viscosity increase rate in air, and the number average particle diameter were as shown in Table 1.

### [Examples 2 to 9 and Comparative Examples 1 to 6]

The same operation as in Example 1 was performed except that the type and blending amount of the aromatic compound substituted with two hydroxyl groups, the blending amount of 2,6-dichlorobenzonitrile, the blending amount of sodium carbonate, and the polymerization time (retention time after reaching 200°C) were changed as shown in Tables 1 and 2. The obtained polyether nitrile particles were analyzed. Table 1 and Table 2 show the ratio "integral value of peak A/integral value of peak B", the ratio "integral value of peaks (A + C)/integral value of peak B", the melting point, the weight loss rate in air, the viscosity increase rate in air, and the number average particle diameter.

**[Table 1-1]**

| | Example 1 | Example 2 | Example 3 | Example 4 |
|---|---|---|---|---|
| Blending amount of hydroquinone (mmol) | 80.0 | - | - | 76.0 |
| Blending amount of resorcinol (mmol) | - | 80.0 | - | 4.0 |
| Blending amount of 4,4'-dihydroxybiphenyl (mmol) | - | - | 80.0 | - |
| Blending amount of 2,6-dichlorobenzonitrile (mmol) | 81.0 | 81.0 | 81.0 | 81.0 |
| Blending amount of sodium carbonate (mmol) | 96.0 | 96.0 | 96.0 | 96.0 |
| Polymerization time (h) | 8 | 8 | 8 | 8 |
| Integral value of peak A/integral value of peak B | 0.012 | 0.015 | 0.013 | 0.016 |
| Integral value of peaks (A + C)/inteqral value of peak B | 0.040 | 0.030 | 0.040 | 0.040 |
| Melting point (°C) | 365 | 347 | 352 | 340 |
| Weight loss rate (%) in air | 0.3 | 0.4 | 0.3 | 0.4 |
| Viscosity increase rate (%) in air | 27 | 32 | 28 | 32 |
| Number average particle diameter (µm) | 120 | 112 | 125 | 124 |

**[Table 1-2]**

| | Example 5 | Example 6 | Example 7 | Example 8 | Example 9 |
|---|---|---|---|---|---|
| Blending amount of hydroquinone (mmol) | 76.0 | 72.8 | 76.0 | 76.0 | 4.0 |
| Blending amount of resorcinol (mmol) | - | - | 4.0 | 4.0 | - |
| Blending amount of 4,4'-dihvdroxvbiphenvl (mmol) | 4.0 | 7.2 | - | - | 76.0 |
| Blending amount of 2,6-dichlorobenzonitrile (mmol) | 81.0 | 81.0 | 81.0 | 81.0 | 81.0 |
| Blending amount of sodium carbonate (mmol) | 96.0 | 96.0 | 96.0 | 92.0 | 96.0 |
| Polymerization time (h) | 8 | 8 | 5 | 8 | 8 |
| Integral value of peak A/integral value of peak B | 0.015 | 0.018 | 0.032 | 0.048 | 0.015 |
| Integral value of peaks (A + C)/integral value of peak B | 0.040 | 0.040 | 0.049 | 0.058 | 0.041 |
| Melting point (°C) | 339 | 344 | 341 | 340 | 335 |
| Weight loss rate (%) in air | 0.3 | 0.4 | 0.6 | 0.6 | 0.4 |
| Viscosity increase rate (%) in air | 28 | 34 | 60 | 61 | 28 |
| Number average particle diameter (µm) | 124 | 125 | 125 | 124 | 120 |

**[Table 2-1]**

| | Comparative Example 1 | Comparative Example 2 | Comparative Example 3 |
|---|---|---|---|
| Blending amount of hydroquinone (mmol) | 80.0 | 76.0 | 76.0 |
| Blending amount of resorcinol (mmol) | - | 4.0 | - |
| Blending amount of 4,4'-dihydroxybiphenyl (mmol) | - | - | 4.0 |
| Blending amount of 2,6-dichlorobenzonitrile (mmol) | 80.0 | 80.0 | 80.0 |
| Blending amount of sodium carbonate (mmol) | 88.0 | 88.0 | 88.0 |
| Polymerization time (h) | 5 | 5 | 5 |
| Integral value of peak A/integral value of peak B | 0.052 | 0.051 | 0.052 |
| Integral value of peaks (A + C)/integral value of peak B | 0.062 | 0.060 | 0.060 |
| Melting point (°C) | 363 | 340 | 339 |
| Weight loss rate (%) in air | 1.1 | 1.0 | 1.1 |
| Viscosity increase rate (%) in air | 83 | 82 | 85 |
| Number average particle diameter (µm) | 125 | 124 | 126 |

**[Table 2-2]**

| | Comparative Example 4 | Comparative Example 5 | Comparative Example 6 |
|---|---|---|---|
| Blending amount of hydroquinone (mmol) | - | 4.0 | 76.0 |
| Blending amount of resorcinol (mmol) | - | - | 4.0 |
| Blending amount of 4,4'-dihydroxybiphenyl (mmol) | 80.0 | 76.0 | - |
| Blending amount of 2,6-dichlorobenzonitrile (mmol) | 80.0 | 80.0 | 81.0 |
| Blending amount of sodium carbonate (mmol) | 96.0 | 96.0 | 88.0 |
| Polymerization time (h) | 8 | 8 | 5 |
| Integral value of peak A/integral value of peak B | 0.051 | 0.051 | 0.054 |
| Integral value of peaks (A + C)/integral value of peak B | 0.061 | 0.060 | 0.063 |
| Melting point (°C) | 352 | 335 | 340 |
| Weight loss rate (%) in air | 1.0 | 1.0 | 1.2 |
| Viscosity increase rate (%) in air | 81 | 82 | 105 |
| Number average particle diameter (µm) | 128 | 124 | 133 |

### [Example 10]

The particles obtained in Example 1 were pulverized with a counter jet mill to provide polyether nitrile particles having a number average particle diameter of 1.2 µm. The obtained polyether nitrile particles were analyzed. The ratio "integral value of peak A/integral value of peak B", the ratio "integral value of peaks (A + C)/integral value of peak B", the melting point, the weight loss rate in air, and the viscosity increase rate in air were comparable with those of the polyether nitrile particles obtained in Example 1.

### [Example 11]

The same procedure as in Example 1 was carried out, except that the post-treatment method after polymerization was changed such that the reaction solution was discharged into a receiving container containing 300 mL of a mixed solvent of NMP : water = 6 : 4 (volume ratio) to form the polyether nitrile into particles, and the resulting polyether nitrile particles were washed 3 times with 300 mL of a mixed solvent (room temperature) of NMP : water = 8 : 2 (volume ratio) and 3 times with 300 mL of warm water (80°C) and vacuum-dried at 80°C overnight. The obtained polyether nitrile particles were analyzed. The ratio "integral value of peak A/integral value of peak B", the ratio "integral value of peaks (A + C)/integral value of peak B", the melting point, the weight loss rate in air, and the viscosity increase rate in air were comparable with those of the polyether nitrile particles obtained in Example 1. The number average particle diameter of the polyether nitrile particles was 180 µm.

From the results of Examples 1 to 9, it can be seen that when the ratio "integral value of peak A/integral value of peak B" was in the range of 0.050 or less, the thermal stability (weight loss rate in air and viscosity increase rate in air) was better than in Comparative Examples 1 to 6 in which the ratios "integral value of peak A/integral value of peak B" were in the range larger than 0.050.

On the other hand, as in Comparative Examples 1 to 5, when the kind and the blending amount of the aromatic compound substituted with 2 hydroxyl groups and the blending amount of 2,6-dichlorobenzonitrile were the same, the ratio "integral value of peak A/integral value of peak B" tended to be larger than 0.050.

Comparative Example 6 is a comparative example corresponding to Example 1 of International Publication No. WO 2021/21492, and the ratio "integral value of peak A/integral value of peak B" was larger than 0.050. It can be seen that Examples 7 and 8 of the present application had smaller "integral value of peak A/integral value of peak B" ratios and had better thermal stability (weight loss rate in air and viscosity increase rate in air) than Comparative Example 6.

## Claims

1. A polyether nitrile represented by Formula (I), wherein a ratio "integral value of peak A/integral value of peak B" in proton nuclear magnetic resonance measurement measured using a mixed solvent of pentafluorophenol and deuterated chloroform in a volume ratio of 5 : 4 is 0.050 or less:
peak A: a peak having a peak top at 7.10 to 7.20 ppm
peak B: a peak having a peak top at 7.55 to 7.68 ppm 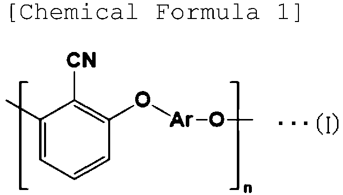
where in Formula (I), Ar is a unit represented by any one of Formulas (a) to (f), and Ar may include one kind or two or more kinds of units:

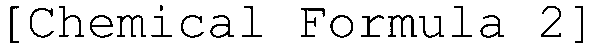

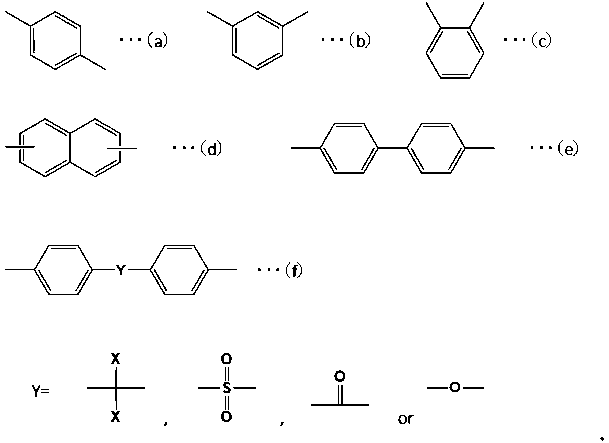

2. The polyether nitrile according to claim 1, wherein a ratio "integral value of peak representing terminal/integral value of peak B" in proton nuclear magnetic resonance measurement measured using a mixed solvent of pentafluorophenol and deuterated chloroform in a volume ratio of 5 : 4 is 0.001 to 0.055.

3. The polyether nitrile according to claim 1 or 2, wherein Ar includes two or more kinds of units.

4. A polyether nitrile particle comprising the polyether nitrile according to claim 1 or 2, having a number average particle diameter of 0.1 to 200 µm.

5. A member for a mobility, comprising the polyether nitrile according to claim 1 or 2.

6. A member for a structural material, comprising the polyether nitrile according to claim 1 or 2.

7. A member for an electrical/electronic material, comprising the polyether nitrile according to claim 1 or 2.

8. A mobility comprising the member for a mobility according to claim 5.

9. A structural member comprising the member for a structural material according to claim 6.

10. An electrical/electronic product comprising the member for an electrical/electronic material according to claim 7.
